(19) Europäisches Patentamt
European Patent Office
Office européen des brevets

(11) **EP 4 495 882 A1**

(12) **EUROPEAN PATENT APPLICATION**

(43) Date of publication:
**22.01.2025 Bulletin 2025/04**

(21) Application number: **24165967.1**

(22) Date of filing: **25.03.2024**

(51) International Patent Classification (IPC):
*G06T 7/246* (2017.01)

(52) Cooperative Patent Classification (CPC):
**G06T 7/248;** G06T 2207/10016; G06T 2207/20021;
G06T 2207/20084; G06T 2207/30196;
G06T 2207/30241

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.07.2023 US 202318353237**

(71) Applicant: **Meta Platforms Technologies, LLC
Menlo Park, CA 94025 (US)**

(72) Inventors:
• **Li, Xiaoxing
Menlo Park (US)**
• **Hu, Jun
Menlo Park (US)**
• **Peng, Honghong
Menlo Park (US)**
• **Huang, Mingzhen
Menlo Park (US)**
• **Seyfi, Mehdi
Menlo Park (US)**

(74) Representative: **Murgitroyd & Company
Murgitroyd House
165-169 Scotland Street
Glasgow G5 8PL (GB)**

(54) **SYSTEMS AND METHODS FOR TRACKING MULTIPLE DEFORMABLE OBJECTS IN EGOCENTRIC VIDEOS**

(57) A computer-implemented method may include receiving a video stream with a plurality of frames, detecting an object within a selected frame of the video stream, decomposing the object within the selected frame into patches, associating a subset of the patches with candidate patches within a subsequent frame of the video stream, and determining, based at least in part on the locations of the candidate patches within the subsequent frame, the location of the object within the subsequent frame of the video stream. Various other methods, systems, and computer-readable media are also disclosed.

Method 700

Start

Receive a video stream with a plurality of frames
710

Detect at least one object within a selected frame of the video stream
720

Decompose the object within the selected frame into patches
730

Associate a subset of the patches with one or more candidate patches within a subsequent frame of the video stream
740

Determine, based at least in part on a location of the candidate patches within the subsequent frame, a location of the object within the subsequent frame of the video stream
750

End

**FIG. 7**

**Description**

**FIELD**

This disclosure relates to a computer-implemented method, system and non-transitory computer-readable medium for tracking multiple deformable objects in egocentric videos.

**SUMMARY**

According to an aspect, there is provided a computer-implemented method comprising:

receiving a video stream with a plurality of frames;
detecting at least one object within a selected frame of the video stream;
decomposing the at least one object within the selected frame into a plurality of patches;
associating a subset of the plurality of patches with at least one candidate patch within a subsequent frame of the video stream; and
determining, based at least in part on a location of the at least one candidate patch within the subsequent frame, a location of the at least one object within the subsequent frame of the video stream.

Decomposing the at least one object into the plurality of patches may comprise decomposing the at least one object into a tessellation of patches.
Determining the location of the at least one object may comprise determining a bounding box for the at least one object based at least in part on determining a bounding box that contains the at least one candidate patch.
The method may further comprise:

retrieving at least one previous patch of the at least one object from a previous frame of the video stream;
wherein associating the subset of the plurality of patches with the at least one candidate patch within the subsequent frame further comprises associating the at least one previous patch of the at least one object with the at least one candidate patch within the subsequent frame.

The method may further comprise:
storing at least one of the subset of the plurality of patches in association with the at least one object.
Associating the subset of the plurality of patches with the at least one candidate patch within the subsequent frame may comprise estimating a location of the at least one candidate patch within the subsequent frame based at least in part on at least one of:

a location of one or more of the subset of the plurality of patches within the selected frame; or
a trajectory of the at least one object at a time of the selected frame.

Associating the subset of the plurality of patches with the at least one candidate patch within the subsequent frame may comprise estimating a location of the at least one candidate patch within the subsequent frame based at least in part on isolating a local motion of the at least one object from an egocentric-based global motion of the video between the selected frame and the subsequent frame.
Isolating the local motion of the at least one object from the egocentric-based global motion of the video stream may comprise:
analyzing a difference between the selected frame and the subsequent frame to estimate the egocentric-based global motion of the video stream between the selected frame and the subsequent frame.
Isolating the local motion of the at least one object from the egocentric-based global motion of the video stream may comprise:
estimating the egocentric-based global motion of the video stream based at least in part on a motion sensor that detects a motion of a device that captures the video.
Detecting the at least one object within the selected frame may comprise detecting a plurality of objects. The method may further comprise separately tracking each of the plurality of objects based on separate sets of patches associated with each of the plurality of objects.
According to another aspect, there is provided a non-transitory computer-readable medium comprising one or more computer-executable instructions that, when executed by at least one processor of a computing device, cause the computing device to implement the method set out above.
According to another aspect, there is provided a system comprising:

at least one physical processor; and

physical memory comprising computer-executable instructions that, when executed by the physical processor, cause the physical processor to implement the method set out above.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

## BRIEF DESCRIPTION OF THE DRAWINGS

The accompanying drawings illustrate a number of exemplary embodiments and are a part of the specification. Together with the following description, these drawings demonstrate and explain various principles of the present disclosure.

FIGS. 1A, 1B, and 1C are example illustrations of deformation, occlusion, and ego motion in videos.
FIG. 2 is an illustration of an example object decomposed into patches.
FIG. 3 is an illustration of an example system for tracking multiple deformable objects in egocentric videos.
FIG. 4 is an illustration of an example motion disentanglement system.
FIG. 5 is an illustration of an example patch propagation across video frames.
FIG. 6 is an illustration of an example system for tracking object patches across video frames.
FIG. 7 is an illustration of an example method for tracking multiple deformable objects in egocentric videos.
FIG. 8 is an illustration of exemplary augmented-reality glasses that may be used in connection with embodiments of this disclosure.
FIG. 9 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

## DETAILED DESCRIPTION OF EXEMPLARY EMBODIMENTS

Wearable cameras have emerged as a rapidly growing trend in the realm of personal technology, changing how users document their lives and interact with the world. These unobtrusive devices offer users the ability to capture hands-free, point-of-view footage in various scenarios, including augmented reality, adventure experiences, law enforcement duties, and content creation. With wearable devices, complicated tasks may potentially be performed via a visual signal analysis. For instance, smart glasses may remind a user if a toddler is running out of the field of view in a supermarket or record when and where a pet was last seen.

As wearable cameras become more powerful with increased battery capacity, sensor size, on-board memory volume, and sophisticated in-device processors, they can provide large volumes of high-quality videos on a daily basis. However, these cameras may generate highly unstable streams owing to their egocentric views. Especially where wearable cameras are worn on a user's head (e.g., as in the case of smart glasses), the large ego motion caused by the head movements of the wearer may often be drastic, unpredictable, and largely uncorrelated to object motions.

Performing fundamental computer vision processing tasks, such as object detection, tracking, and segmentation, efficiently and reliably with on-device processors may be difficult with egocentric video from wearable cameras. Besides being challenged by occlusion, morphing shapes, and multiple visually resembling objects, multiple object tracking algorithms may be stressed by a constantly changing egocentric viewpoint.

The present disclosure is generally directed to systems and methods for object tracking in video, including systems and methods adapted to track multiple deformable objects in egocentric videos. Thus, for example, the disclosed systems and methods may handle rapid object deformation and occlusion, as well as ego motion, in a reliable and computationally efficient manner. The systems and methods described herein may include a motion disentanglement network (e.g., that distinguishes global camera motion from local motion of tracked objects), a patch association network (that divides tracked objects into patches to be individually matched between frames), and/or a patch memory network (to retain features of patches over many frames, which may help should a portion of a tracked object be temporarily occluded).

As will be explained in greater detail below, embodiments of the present disclosure may improve the functioning a computer by improving the computer-vision processing capabilities of the computer. In addition, these embodiments may represent an advance in the field of computer-vision processing.

Features from any of the embodiments described herein may be used in combination with one another in accordance with the general principles described herein. These and other embodiments, features, and advantages will be more fully understood upon reading the following detailed description in conjunction with the accompanying drawings and claims. In some examples, the systems and methods described herein may include and/or implement an end-to-end trainable method for tracking multiple deformable objects in egocentric videos. In some examples, these systems and methods may represent a deformable object as a set of patches, which these systems and methods may then individually detect and track before reassembling the patches at an updated location in a later frame.

In some examples, the systems and methods described herein may include and/or implement a patch association network that is able to find a distinct local region (e.g., a dog's head and feet) to localize and associate objects in a later frame. In addition, in some examples, these systems and methods may retain in memory deformed and/or occluded patches that cannot be matched in the current frame for future associations when regions of an object corresponding to those patches appear clearly again. Thus, these systems and methods may successfully track even severely morphing objects (e.g., a dog quickly turning and contorting in play). Furthermore, in some examples, the systems and methods described herein may include and/or implement a motion disentanglement network that compensates for object and camera motions, reduces search range, and further increases the performance of these systems and methods.

The systems and methods described herein may include and/or implement any of a variety of components, modules, and/or subsystems for tracking objects across video frames. In one example, these systems and methods may include a motion disentanglement module, such as a motion disentanglement network (MDN), a patch association module, such as a patch association network (PAN), and/or a patch memory component, such as a patch memory network (PMN).

As used herein, the term "object" may refer to any integral entity that may be tracked within a video. In some examples, the term "object" may refer to an entity with a coherent form across time. In addition, in some examples, the term "object" may refer to an entity that may deform (e.g., change shape) over time while maintaining its coherent form. Additionally or alternatively, the term "object" may refer to an entity may move within an environment. In some examples, the term "object" may refer to an entity that deforms itself and/or moves itself within an environment (e.g., an animal). In some examples, the term "object" may refer to all of an entity. In some examples, the term "object" may refer to only a part of an entity (e.g., may refer to only the face of a person, only the head of a person, etc.).

The motion disentanglement module (e.g., the MDN) may estimate motion flow between two frames (e.g., two consecutive frames). For example, the motion disentanglement module may control for the global camera motion before estimating the local object motion (thereby making the systems and methods described herein more robust and efficient in tracking objects when the video includes substantial ego motion). As used herein, the term "ego motion" generally refers to a change in perspective of the video (e.g., caused by movement of the camera) and/or to the apparent movement of objects within frames of the video due to such a change in perspective. In some examples, ego motion described herein may be connected to the movement of a user-mounted camera (e.g., a head-mounted camera). As will be explained in greater detail below, in some examples the motion disentanglement module may isolate the local motion of the object from the egocentric-based global motion of the video based at least in part by analyzing a difference between frames to determine the egocentric-based global motion. Additionally or alternatively, in some examples the motion disentanglement module may isolate the local motion of the object from the egocentric-based global motion at least in part by receiving data from a motion sensor (e.g., an accelerometer and/or a gyroscope) that detects the egocentric-based global motion.

The patch association module (e.g., the PAN) may track objects even as they deform or are partially occluded by dividing objects into patches and localizing individual patches by finding matching patches in upcoming frames. As used here, the term "patch" may refer to any image (and/or a set of features extracted therefrom) taken from a location of an object within a frame (e.g., within a bounding box of the object in the frame)-or from a potential location of the object within the frame. In some examples, a patch may be a closed shape. In some examples, a patch may be a tessera (i.e., a shape that is and/or can be tessellated). In some examples, all patches generated, compared, matched, and/or assembled by the systems and methods described herein may have the same size, shape, dimensions, and/or orientation. In one example, a patch may be a rectangle. In some examples, the term "patch" may refer to an image with a certain minimum size (e.g., such that one or more complex features can be identified within and/or extracted from the patch). Thus, for example, the term "patch" may refer to an image of a size greater than one pixel. In various examples, the term "patch" may refer to a rectangular image with no side shorter than 3 pixels, with no side shorter than 5 pixels, with no side shorter than 10 pixels, or with no side shorter than 20 pixels.

The patch memory module (e.g., the PMN) may retain (and, in some examples, update) patches and/or feature embeddings of patches of tracked object across a prolonged time window (e.g., across at least one frame in which a given patch doesn't appear). In some examples, the patch memory module may include a transformer network via which the systems and methodf described herein may use historical patch features for long-term patch association.

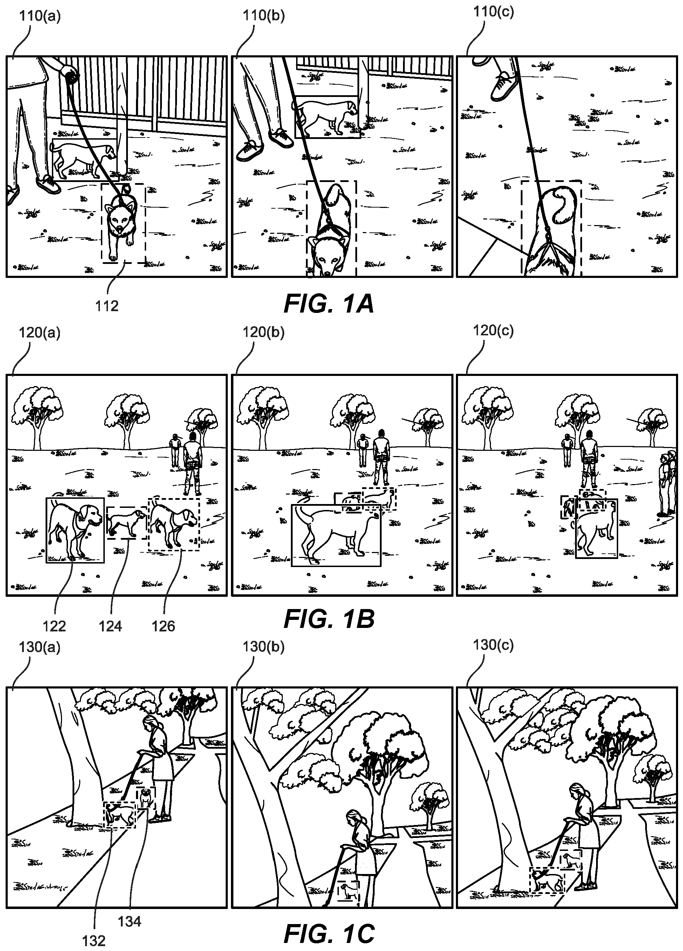

As will be explained in greater detail below, the systems and methods described herein may efficiently and reliably track objects within videos under a variety of conditions. By way of example, FIGS. 1A, 1B, and 1C provide example illustrations of deformation, occlusion, and ego motion in videos.

Thus, for example, FIG. 1A shows an example of tracking a dog 112 across video frames 110(a), 110(b), and 110(c). As shown in FIG. 1A, the image of dog 112 undergoes deformation across frames 110(a)-(c) due to, e.g., the movements of the individual parts of dog 112 relative to each other and due to the change in projection of the image of dog 112 onto frames 110(a)-(c) as the position and angle of dog 112 relative to the camera changes. As used herein, the term "deformation" may refer to any of change in the image of an object across two or more frames of a video (e.g., due to a change in shape of the object and/or a change in perspective by which an image of the object is projected onto the frames).

In addition, FIG. 1B shows an example of tracking dogs 122, 124, and 126 across video frames 120(a), 120(b), and 120(c). As shown in FIG. 1B, while dogs 112, 124, and 126 are all fully visible in frame 120(a), in subsequent frames dogs 124 and 126 are at least partially occluded (e.g., by dog 112). As used here, the term "occlusion" may refer to any disappearance from view of at least a portion of an object (e.g., including, but not limited to, cases in which an intervening object at least partially blocks the view of the occluded object).

In addition, FIG. 1C shows an example of tracking dogs 132 and 134 across video frames 130(a), 130(b), and 130(c). As shown in FIG. 1C, while dogs 132 and 134 may be relatively stationary within their environments across video frames 130(a)-(c), their relative positions within video frames 130(a)-(c) may rapidly and erratically change due to ego motion. As used herein, the term "ego motion" may refer to any motion of an image within a video caused by movement (e.g., translation and/or rotation) of the camera (rather than motion due to, e.g., movement of objects within the environment). In some examples, the term "ego motion" may refer to apparent motion of objects caused by camera movement related to a human-mounted camera. In some examples, the term "ego motion" may refer to such camera movement related to a head-mounted camera. In some examples, the term "global motion" may refer to the motion within video frames of an image and/or elements of the image caused by and/or connected with ego motion, while "local motion" may refer to motion within video frames of an image and/or elements of an image that excludes and/or controls for global motion and/or that is not caused by ego motion.

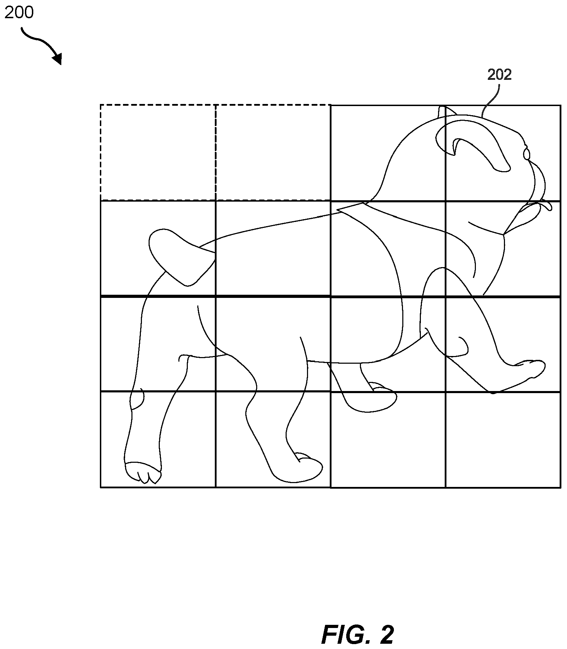

As will be described in greater detail below, the systems and methods described herein may successfully track objects such as dogs 112, 122, 124, 126, 132, and 134, (e.g., as illustrated in FIGS. 1A, 1B, and 1C) despite a combination of deformation, occlusion, and ego motion. FIG. 2 is an illustration of an example object 202 decomposed into a set of patches 200. As shown in FIG. 2, one or more of the systems and methods described herein may divide object 202 into a set of patches 200. As will be explained in greater detail below, these systems and methods may then track object 202 across frames at least in part by detecting features of individual patches across frames.

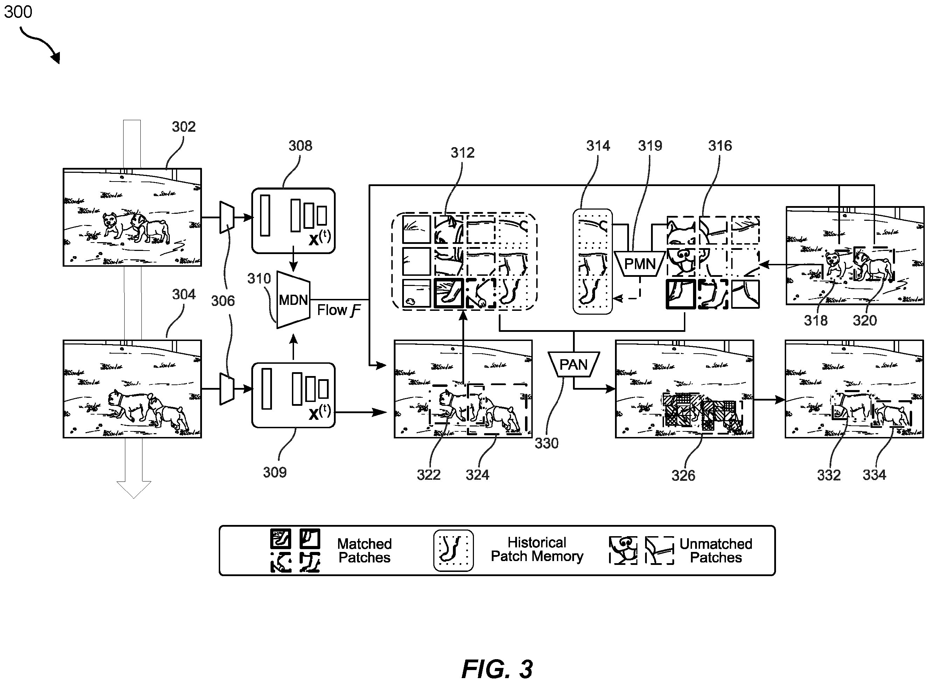

FIG. 3 is an illustration of an example system 300 for tracking multiple deformable objects in egocentric videos. As shown in FIG. 3, system 300 may take as input a video stream that includes, e.g., a frame 302 (e.g., at a time t - 1) and a frame 304 (e.g., at a time t). In one example, the systems and methods described herein may detect objects (e.g., the two dogs) within frame 304, having previously detected the objects in frame 302. A feature extraction module 306 may have previously extracted features 308 from frame 302 and may extract features 309 from frame 304.

The systems and methods described herein may features in any suitable manner and with any suitable format. As one example, feature extraction module 306 may transform an input image into a feature map pyramid (e.g., a feature map pyramid $\{\mathbf{X}_l^{(t)}\}(l \in [0, L)$, where $\mathbf{I}^{(t)}$ is the frame at time t, and $l$ is the level of the pyramid). Thus, for example, features 308 and 309 may each include a hierarchical representation of frames 302 and 304, respectively, representing frames 302 and 304 at different levels of detail and/or abstraction. In one example, feature extraction module 306 may include a deep layer aggregation (DLA) network. For example, feature extraction module 306 may include a DLA-34 backbone (e.g., a DLA network with 34 layers). In one example, extraction module 306 may include a weight-shared backbone.

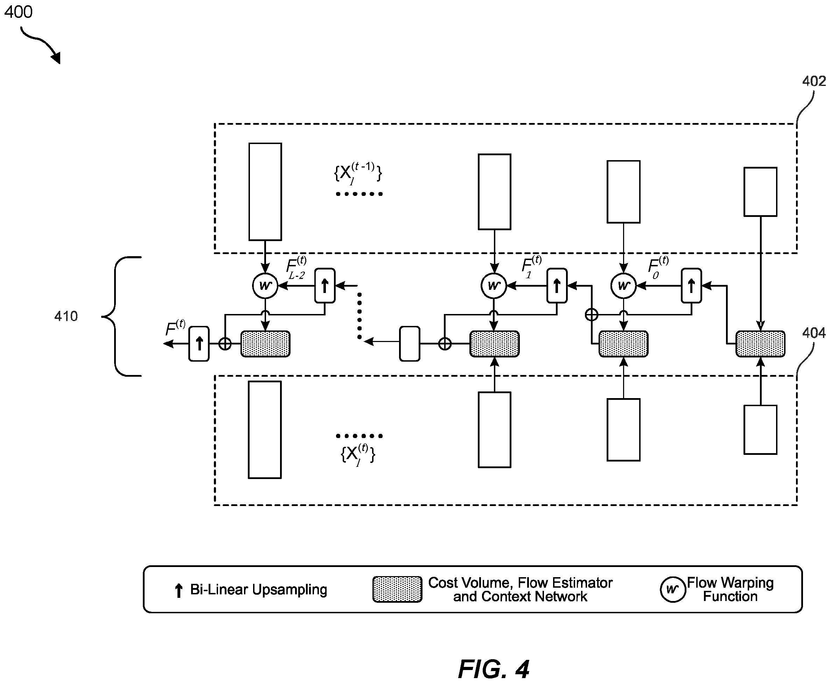

A motion disentanglement module 310 (e.g., an MDN) may take features 308 and 309 as input to estimate global movement between frames 302 and 304. As will be explained in greater detail below (e.g., with respect to FIG. 4), in some examples motion disentanglement module 310 may estimate a pixel-wise motion flow between frames 302 and 304. For example, motion disentanglement module 310 may estimate a pixel-wise motion flow $\mathcal{F}^{(t)}$ between frames 302 and 304. In one example, as discussed earlier, features 308 and 309, which are inputs to motion disentanglement module 310, may be pyramid feature maps (e.g., $\{\mathbf{X}_l^{(t-1)}\}$ and $\{\mathbf{X}_l^{(t)}\}$, respectively).

After estimating global movement between frames 302 and 304, the systems and methods described herein may then, based at least in part on the estimated global movement and at least in part on previously identified locations of the objects in frame 302 (e.g., bounding boxes 318 and 320), the systems and methods described herein may propagate the locations of the objects to frame 304 (e.g., resulting in bounding boxes 322 and 324 being applied to frame 304). As may be appreciated, these systems and methods may include a margin of error in the initial propagation of the locations of the objects to frame 304 (e.g., resulting initially in larger bounding boxes than were used for frame 302).

Having initially propagated bounding boxes 318 to 320 from frame 302 to bounding boxes 322 and 324 for frame 304, the systems and methods described herein may decompose the images within bounding boxes 322 and 324 into patches. For example, the image in bounding box 322 may be decomposed into patches 312. These systems and methods may have previously decomposed the images in bounding boxes 318 and 320 into patches. For example, the image in bounding box 318 may have been decomposed into patches 316.

Continuing with the example of the dog on the left of frames 302 and 304, the systems and methods described herein may provide patches 312 and patches 316 as input to a patch association network (PAN) 330. As will be described in greater detail below, PAN 330 may detect and associate objects by matching the sub-divided patches between frames 302 and 304. In some examples, the detection and association may be performed by a single network to improve both localization and identity association accuracy. PAN 330 may produce patch mappings 326 as output. Based at least in part on patch mappings 326, the systems and methods described herein may determine bounding boxes 332 and 334 for the two dogs (which may be more precise and accurate than bounding boxes 322 and 324).

The systems and methods described herein may also identify unmatched patches (e.g., from the output of PAN 330) and retain them for later use. For example, PAN 330 m ay retain unmatched matches 314 in a memory buffer (e.g., a fixed-length ring patch memory buffer) to track the object based on changing deformation and/or occlusion conditions in future frames. Thus, the systems and methods described herein may include buffered and novel patches from newly seen frames in patch-matching by PAN 330 in subsequent time steps.

FIG. 4 is an illustration of an example motion disentanglement system 400. As shown in FIG. 4, motion disentanglement system 400 may include a motion disentanglement network 410. In some examples, motion disentanglement 410 may correspond to motion disentanglement module 310 in FIG. 3. The systems and methods described herein may provide a pyramid feature map 402 ($\mathbf{X}_l^{(t-1)}$) and a pyramid feature map 404 ($\mathbf{X}_l^{(t)}$) as input to the motional disentanglement network 410. Motion disentanglement network 410 may then estimate the optical flow $\mathcal{F}^{(t)}$ between the two frames based on pyramid processing, warping, and/or the use of a cost volume. In some examples, the cost volume search range may include the whole frame (e.g., to better handle large camera motion for egocentric video).

In one example, $\mathcal{F}_l^{(t)}$ may represent the estimated optical flow at the pyramid level $l$. For level $l = 0$, the motion disentanglement system 400 may use the features $\mathbf{X}_0^{(t)}$ and $\mathbf{X}_0^{(t-1)}$ to construct a cost volume that captures costs for associating each pixel with all pixels at the next frame, as shown in Equation (1):

$$\mathbf{CV}_0(\mathbf{x_1}, \mathbf{x_2}) = \left( \mathbf{X}_0^{(t)}(\mathbf{x_1})^\top \mathbf{X}_0^{(t-1)}(\mathbf{x_2}) \right) \tag{1}$$

where T is the transpose operator and is the 1-dimensional feature vector extracted from at pixel. The cost volume $\mathbf{CV_0}$ feeds to the optical flow estimator and the context network and produces $\mathcal{F}_0^{(t)}$ which is mainly responsible for the large camera motion and is self-supervised, as is described in greater detail below.

In some examples, instead of performing a global search over the whole image for any level $l >= 0$, motion disentanglement system 400 may use a different approach by constructing a cost volume that captures costs for associating each to pixel with only the neighboring pixels at the next frame, as shown in Equation (2):

$$\mathbf{CV}_l(\mathbf{x_1}, \mathbf{x_2}) = \left( \mathbf{X}_l^{(t)}(\mathbf{x_1})^\top \widetilde{\mathbf{X}}_l^{(t-1)}(\mathbf{x_2}) \right), where \ |\mathbf{x_1} - \mathbf{x_2}|_\infty \leq r \tag{2}$$

where $\widetilde{\mathbf{X}}_l^{(t-1)}$ is the warped version of $\mathbf{X}_l^{(t-1)}$ under the upsampled flow $\mathcal{F}_{l-1}^{(t)}$. Similar to the level 0, $\mathbf{CV}_l$ feeds to the optical flow estimator and the context network and produces $\mathcal{F}_l^{(t)}$. This is a recursive process that continues through to the layer L - 1 and produces a full resolution flow $\mathcal{F}^{(t)} = \mathcal{F}_{L-1}^{(t)}$.

The systems and methods described herein may (e.g., according to one or more of the steps described above)

determine feature maps $\{\mathbf{X}_l^{(t-1)}\}$ and $\{\mathbf{X}_l^{(t)}\}$, an estimated flow $\mathcal{F}$, and the bounding box of the tracked object $\mathcal{B}^{(t)}$ in $\mathbf{I}^{(t-1)}$. These systems and methods may use the feature maps of the two frames, the flow between the frames, and the bounding box of the earlier frame to extend the trajectory into $\mathbf{I}^{(t)}$ by simultaneously detecting and tracking one or more objects.

In some examples, the systems and methods described herein may first use a Region of Interest (ROI) Align operation to obtain features $\mathbf{K}^{(t-1)} \in \mathbb{R}^{n \times n \times d}$ for each tracked object in $\mathbf{I}^{(t-1)}$, where $n$ is a hyper-parameter defining the feature resolution, and $d$ is the number of channels of the ROI feature embedding. By doing so, these systems and methods may obtain features that not only are translation invariant, but also have a unified feature size. Thus, in some examples, these systems may perform the ROI Align operation by dividing the region of interest into $n \times n$ super-pixels, where each super-pixel is a small image patch $\mathbf{P}_i^{(t-1)}$, $i \in [0, n^2)$. In addition, in some examples, these systems and methods may convert each patch to a feature embedding of d-dimension, which may be donated as $\kappa_i \in \mathbb{R}^{1 \times d}$, where $i$ is the patch index.

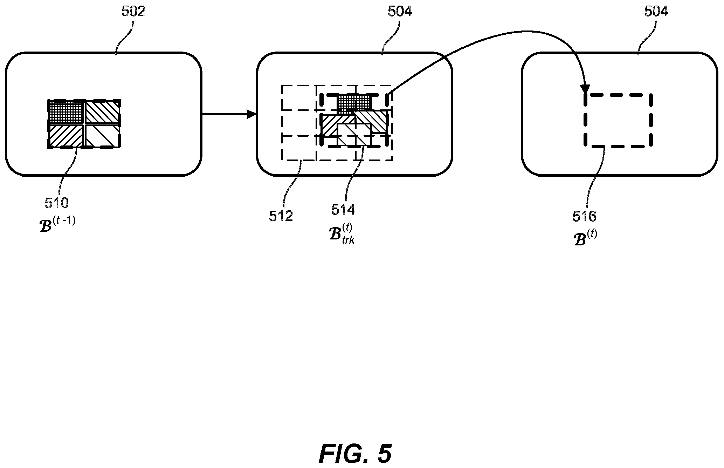

FIG. 5 is an illustration of an example patch propagation across video frames. Forexample, the systems and methods described herein may track patches (and thus objects composed of the patches) from $\mathbf{I}^{(t-1)}$ (e.g., a frame 502) to $\mathbf{I}^{(t)}$ (e.g., a frame 504). As shown in FIG. 5, an object decomposed into patches may be located within a bounding box 510 (denoted by $\mathcal{B}^{(t-1)}$) in frame 502. The systems and methods described herein may locate the position of $\mathcal{B}^{(t-1)}$ on $\mathbf{I}^{(t)}$ and obtain $\mathcal{B}^{(t)}$. For example, these systems and methods may establish a potential searching region 512 within frame 504. In one example, these systems and methods may establish potential searching region 512 by propagating the center point of bounding box 510 with flow $\mathcal{F}$. These systems and methods may then enlarge the size of bounding box 150 by a predetermined ratio $\alpha > 1$ to produce potential searching region 512, which may be large enough to capture the intended object, even in the case of zooming in between frames or a stretch deformation between frames. These systems and methods may then sub-divide potential searching region 512 into $\alpha n \times \alpha n$ super-pixels, which may yield features $\mathbf{K}^{(t)} \in \mathbb{R}^{\alpha n \times \alpha n \times d}$.

As will be explained in greater detail below, the systems and methods described herein may detect and track an object from frame 502 to frame 504 by associating each patch in frame 502 with candidate patches (e.g., within potential searching region 512) in frame 504. Once these systems have localized matching patches within frame 504, these systems and methods may define a minimum bounding box 514 (denoted by $\mathcal{B}_{trk}^{(t)}$) as the initial tracked object location. In some examples, these systems and methods may refine the initial tracked object location, resulting in a bounding box 516 (denoted by $\mathcal{B}^{(t)}$) for the object in frame 504.

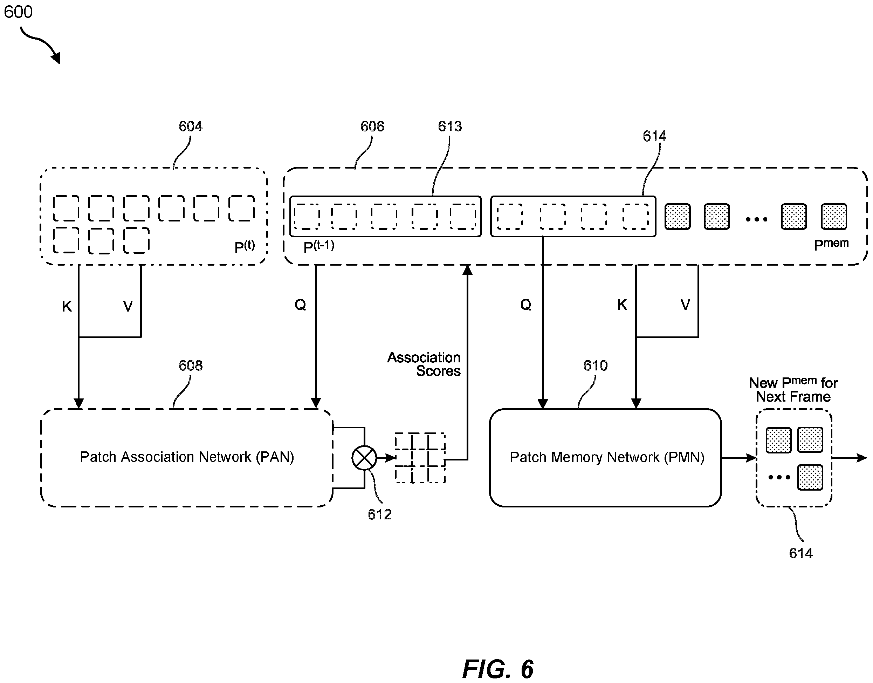

FIG. 6 is an illustration of an example system 600 for tracking object patches across video frames. As shown in FIG. 6, system 600 may include a patch association network (PAN) 608 and a patch memory network (PMN) 610. In some examples, PAN 608 may correspond to PAN 330 of FIG. 3 and PMN 610 may correspond to PMN 319 of FIG. 3. In some examples, PAN 608 and PMN 610 may represent and/or include transformer networks. System 600 may also include patches 604 (denoted as $\mathbf{P}^{(t)}$) from frame $\mathbf{I}^{(t)}$ and patches 606 from frame $\mathbf{I}^{(t-1)}$ (denoted as $\mathbf{P}^{(t-1)}$) and from memory (denoted as $\mathbf{P}^{mem}$). Some of patches 606 may be matched to one or more of patches 604 (e.g., becoming matched patches 613), while some of patches 606 may become unmatched patches 614. As shown in FIG. 6, 'Q', 'K', and 'V' may represent query, key, and value inputs to PAN 608 and PMN 610 (e.g., to attention mechanisms of the transformer networks).

PAN 608 may associate patches from frame $\mathbf{I}^{(t-1)}$ with candidate patches from frame $\mathbf{I}^{(t)}$. In some examples, PAN 608 may associate patches in a manner that takes into account cross-patch relationships (rather than, e.g., treating each individual patch independently). Thus, PAN 608 may implement an approach that accounts for patches of an object belonging to the same object. For example, for each object, PAN 608 may compute a set of associate scores $\mathcal{S}_i$ between each query patch (e.g., from frame $\mathbf{I}^{(t-1)}$ and/or from remembered patches) and all candidate patches (e.g., from a searching region of frame $\mathbf{I}^{(t-1)}$) using a transformer encoder-decoder network frame $g(\cdot, \cdot)$, resulting in scores

$$\mathcal{S}_i = g(\kappa_i^{(t-1)}, \mathbf{K}^{(t)}) \in \mathbb{R}^{1 \times \alpha^2 n^2}.$$

PAN 608 may then normalize each set of association scores $\mathcal{S}_i$ between a query patch from frame $\mathbf{I}^{(t-1)}$ and all the candidate patches in frame $\mathbf{I}^{(t)}$. For example, PAN 608 may normalize each set of association scores using a softmax operation.

After computing the association scores for all patches, system 600 may select matches between patches based at least in part on the association scores. In one example, system 600 may select matches between patches using a sub-grid search. For example, system 600 may leave as unmatched all query patches with a largest association score smaller than a threshold θ (e.g., because these patches might be heavily occluded or going out of view). System 600 may then tag remaining patches as matched, where, for each matched patch, scores $\mathcal{S}_i$ represent the likelihood that patch $\mathbf{P}_i^{(t-1)}$ corresponds to each of the target patches in frame $\mathbf{I}^{(t)}$. System 600 may then localize each matched patch in frame $\mathbf{I}^{(t)}$ by the weighted sum of all possible grid locations, using the normalized association scores as weights.

Once system 600 has localized patches for an object in frame $\mathbf{I}^{(t)}$, system 600 may determine a minimum bounding rectangle for the localized patches as the initial tracked object location $\mathcal{B}_{trk}^{(t)}$. System 600 may treat $\mathcal{B}_{trk}^{(t)}$ as a class-specific proposal and further improve it based on the objectness using a region-based convolutional neural network (e.g., Faster-RCNN). System 600 may use a regression branch to refine the bounding box $\mathcal{B}_{trk}^{(t)}$ and obtain $\mathcal{B}^{(t)}$ as well as produce a tracking confidence score $\mathcal{P}(\mathcal{B}^{(t)}|\mathcal{B}_{trk}^{(t)})$, which may combine both detection and identity association confidence. Thus, the confidence score may carry information about appearance similarity in the temporal domain and help to minimize false negatives.

System 600 may compute the confidence score of a tracklet T of length t as the sequence of detected boxes in the past frames, such that $T^t = \{B^{(0)}, B^{(1)}, ..., B^{(t)}\}$. System 600 may compute the confidence of the tracklet T recursively (e.g., using a chain rule), as shown in Equation (3):

$$\mathcal{P}(T^t) = \mathcal{P}(T^t|T^{t-1})\mathcal{P}(T^{t-1}) \tag{3}$$

where $\mathcal{P}(T^t|T^{t-1})$ has two components, one being the regression confidence obtained during box refinement, and the other being an ROI-wise association score $\bar{\mathcal{S}}^t$ which system 600 may compute by averaging the normalized association scores $\mathcal{S}_i$ for all matched patches inside the object. Thus, system 600 may compute the tracking confidence score as shown in Equation (4):

$$\mathcal{P}(T^t) = \mathcal{P}(T^t|T^{t-1})\mathcal{P}(T^{t-1})\,\bar{\mathcal{S}}^t \tag{4}$$

As mentioned earlier, system 600 may include patch memory network (PMN) 610. PMN 610 may gather a collection of patches $\mathbf{P}^{mem}$ to describe the long-term appearance of each object being tracked. As explained above, PAN 608 may include $\mathbf{P}^{mem}$ in the patch association process along with patches in frame $\mathbf{I}^{(t-1)}$. Once PAN 608 has performed the patch association process, patches 606 may include matched patches 613 and unmatched patches 614. Some of ummatched patches 614 may have a novel appearance (e.g., introduced by deformation or occlusion). Thus, system 600 may use unmatched patches 614 as queries in PMN 610, thereby exploring the similarity between unmatched patches and all other patches, including the $\mathbf{P}^{mem}$ inherited from the previous frame. System 600 may obtain the updated unmatched patch features from outputs from PMN 610 and include those patched in $\mathbf{P}^{mem}$. In addition, system 600 may remove matched patches from $\mathbf{P}^{mem}$. In some examples, system 600 may manage the $\mathbf{P}^{mem}$ in a first-in-first-out manner, where old patches may be removed automatically subject to a fixed time window $\mathcal{B}$.

In some examples, the systems and methods described herein may track objects, recognize when objects are not successfully being tracked, and/or track new objects. For example, these systems and methods may include and/or receive input from an object detector and start tracking the object detected by the object detector. In some examples, these systems and methods may apply one or more requirements before tracking an object detected by the object detector. For example, these systems and methods may only track newly detected objects with a detection confidence score above a predetermined threshold. Additionally or alternatively, these systems and methods may only track newly detected objects with an Intersection over Union measure below a predetermined threshold for each existing object being tracked.

In addition, these systems and methods may track all active objects $\mathcal{B}^{(t-1)}$ from the previous frame. After the tracking step, these systems and methods may mark all objects $\mathcal{B}^{(t)}$ with a confidence score above a predetermined threshold, and mark all remaining objects as mis-tracked. In some examples, these systems and methods may not immediately discard mis-tracked objects, but instead persist the objects in memory for a predetermined number of frames, for potential resumption of tracking after brief occlusion.

In some examples, the systems and methods described herein may train one or more of the machine learning components described herein. In some examples, these systems and methods may train a motion detection network (MDN). In one example, during training these systems may provide as inputs to the MDN either two frames randomly sampled from the same video or with randomly shifted and rotated static images. These systems may train a camera flow estimator in a supervised fashion with static images, where the random transforms are converted into dense flow vector fields. Thus the camera loss $\mathcal{L}_{cf}$ may be formulated as a standard endpoint error between the predicted camera flow and the generated dense camera flow. These systems may set $\mathcal{L}_{cf}$ = 0 when the inputs are a video image sequence as the ground truth camera flow may not be available in a video sequence.

In some examples, instead of obtaining the ground truth dense motion flow annotation for real-world video captures, the systems described herein may generate a sparse pseudo-flow for training. Given an annotated object that appears on two distinct frames, these systems may compute the displacement of the bounding box central points $p^{(t)}$ and $p^{(t-1)}$ and spread it into a small neighborhood of radius $r$, as shown in Equation (5):

$$\mathcal{F}_q^{gt} = p^{(t)} - p^{(t-1)}, q \in N_r(p) \tag{5}$$

These systems may then set the overall motion flow loss to the endpoint error, accumulated across layers $l$ in the feature pyramid, as shown in Equation (6):

$$\mathcal{L}_f = \sum_l ||\mathcal{F}_l - \mathcal{F}^{gt}||_2 \tag{6}$$

where $\mathcal{L}_f$ is only calculated at the pixels that have a generated ground truth flow.

As another example, the systems described herein may train a patch association network (PAN). The PAN training may be supervised by a patch association loss $\mathcal{L}_{pm}$, as shown in Equation (7):

$$\mathcal{L}_{pm} = -\sum_i^{n^2} \sum_j^{\alpha^2 n^2} \sigma(\mathbf{P}_j^{(t)}) \log \mathcal{S}_i(j)) \tag{7}$$

where $i$ is the index of query patches, and $\mathcal{S}_i$ $(j)$ represents the matching score between the query patch and the $j$th candidate patch. $\sigma\left(\mathbf{P}_j^{(t)}\right) = 1$ if $\mathbf{P}_j^{(t)}$ has an overlapping with the ground truth bounding box. Otherwise $\sigma$ is set to zero. $\alpha$ is the scale adaptive ratio described earlier.

To train all modules in the network, the systems described herein may use the combined loss function shown in Equation (8):

$$\mathcal{L} = \mathcal{L}_f + \mathcal{L}_{cf} + \mathcal{L}_{pm} + \mathcal{L}_{det} \tag{8}$$

where $\mathcal{L}_{det}$ is the standard detection loss.

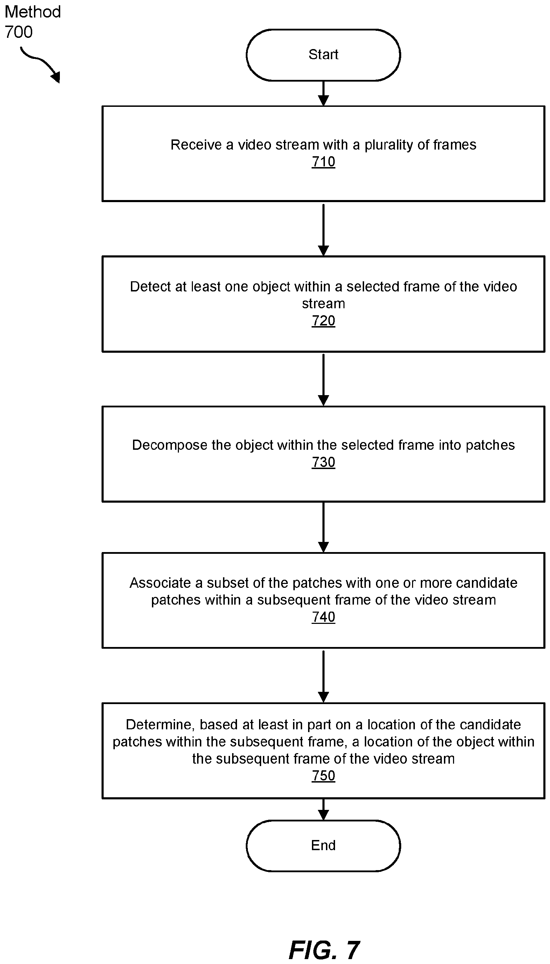

FIG. 7 is an illustration of an example computer-implemented method 700 for tracking multiple deformable objects in egocentric videos. The steps shown in FIG. 7 may be performed by any suitable computer-executable code and/or computing system. In one example, each of the steps shown in FIG. 7 may represent an algorithm whose structure includes and/or is represented by multiple sub-steps, examples of which will be provided in greater detail below.

As illustrated in FIG. 1, at step 710 one or more of the systems described herein may receive a video stream with a plurality of frames.. These systems may receive the video stream in any suitable context. For example, these systems may receive a live video stream in real-time. In some examples, these systems may receive the video stream from a user-mounted camera. For example, these systems may receive the video stream from a head-mounted camera. In some examples, one or more of the systems described may operate as a part of a broader user-mounted system that includes the user-mounted camera. These systems may receive the video stream in any suitable format. For example, these systems may receive the video stream as a series of decoded frames.

At step 710 one or more of the systems described herein may detect at least one object within a selected frame of the video stream. These systems may detect the object in any of a variety of ways. In some examples, these systems may detect a new object (e.g., that was not detected in a previous frame and/or in any previous frames of the video stream). For example, these systems may receive input from an object detection module that identifies an object within a frame by appearance. In some examples, these systems may detect the object within the frame by identifying a tracked object. For example, these systems may identify an object that was tracked across one or more previous frames. In some examples, these systems may identify a previously mis-tracked object that did not appear in the immediately previous frame but which matches one or more features preserved in memory from a previous tracking operation performed on one or more previous frames within the video stream.

At step 730 one or more of the systems described herein may decompose the object within the selected frame into patches. These systems may decompose the object into patches in any suitable manner. For example, these systems may divide an image within a bounding box that defines the location of the object into smaller boxes.

At step 740 one or more of the systems described herein may associate a subset of the patches with one or more candidate patches within a subsequent frame of the video stream. These systems may associate the subset of patches with the candidate patches in any suitable manner. In some examples, these systems may associate the subset of patches with the candidate patches based at least in part on a similarity between features of patches in the subset of patches and features of patches among the candidate patches. Additionally or alternatively, these systems may associate the subset of patches with the candidate patches based at least in part on a relationship among the subset of patches (e.g., with the object) and an imputed relationship among the candidate patches. In some examples, these systems may associate the subset of patches with the candidate patches based at least in part on a location of the candidate patches within the subsequent frame relative to a location of the subset of patches within the selected frame (e.g., after controlling for an overall flow determined between the selected frame and the subsequent frame).

At step 750, one or more of the systems described herein may determine, based at least in part on a location of the candidate patches within the subsequent frame, a location of the object within the subsequent frame of the video stream. For example, these systems may determine the location of the object within the subsequent frame by determining a bounding box that contains the candidate patches.

Example Embodiments

Example 1: A computer-implemented method for may include receiving a video stream with a plurality of frames; detecting at least one object within a selected frame of the video stream; decomposing the at least one object within the selected frame into a plurality of patches; associating a subset of the plurality of patches with at least one candidate patch within a subsequent frame of the video stream; and determining, based at least in part on a location of the at least one candidate patch within the subsequent frame, a location of the object within the subsequent frame of the video stream.

Example 2: The computer-implemented method of Example 1, where decomposing at least one object into the plurality of patches includes decomposing the at least one object into a tessellation of patches.

Example 3: The computer-implemented method of any of Examples 1 and 2, where determining the location of the object includes determining a bounding box for the object based at least in part on determining a bounding box that contains the at least one candidate patch .

Example 4: The computer-implemented method of any of Examples 1-3, further including retrieving at least one previous patch of the object from a previous frame of the video stream; where associating the subset of the plurality of patches with the at least one candidate patch within the subsequent frame further includes associating the at least one previous patch of the object with the at least one candidate patch within the subsequent frame.

Example 5: The computer-implemented method of any of Examples 1-4, further including storing at least one of the subset of the plurality of patches in association with the object.

Example 6: The computer-implemented method of any of Examples 1-5, where associating the subset of the plurality of patches with the at least one candidate patch within the subsequent frame includes estimating a location of the at least one candidate patch within the subsequent frame based in part on at least one of: a location of one or more of the subset of the plurality of patches within the selected frame; or a trajectory of the object at a time of the selected frame.

Example 7: The computer-implemented method of any of Examples 1-6, where associating the subset of the plurality of patches with the at least one candidate patch within the subsequent frame includes estimating a location of the at least one candidate patch within the subsequent frame based at least in part on isolating a local motion of the object from an egocentric-based global motion of the video between the selected frame and the subsequent frame.

Example 8: The computer-implemented method of any of Examples 1-7, where isolating the local motion of the object from the egocentric-based global motion of the video includes analyzing a difference between the selected frame and the subsequent frame to estimate the egocentric-based global motion of the video between the selected frame and the subsequent frame.

Example 9: The computer-implemented method of any of Examples 1-8, where isolating the local motion of the object from the egocentric-based global motion of the video includes estimating the egocentric-based global motion of the video based at least in part on a motion sensor that detects a motion of a device that captures the vide.

Example 10: The computer-implemented method of any of Examples 1-9, where detecting the at least one object within the selected frame includes detecting a plurality of objects; further including separately tracking the multiple objects based on separate sets of patches associated with each of the multiple objects.

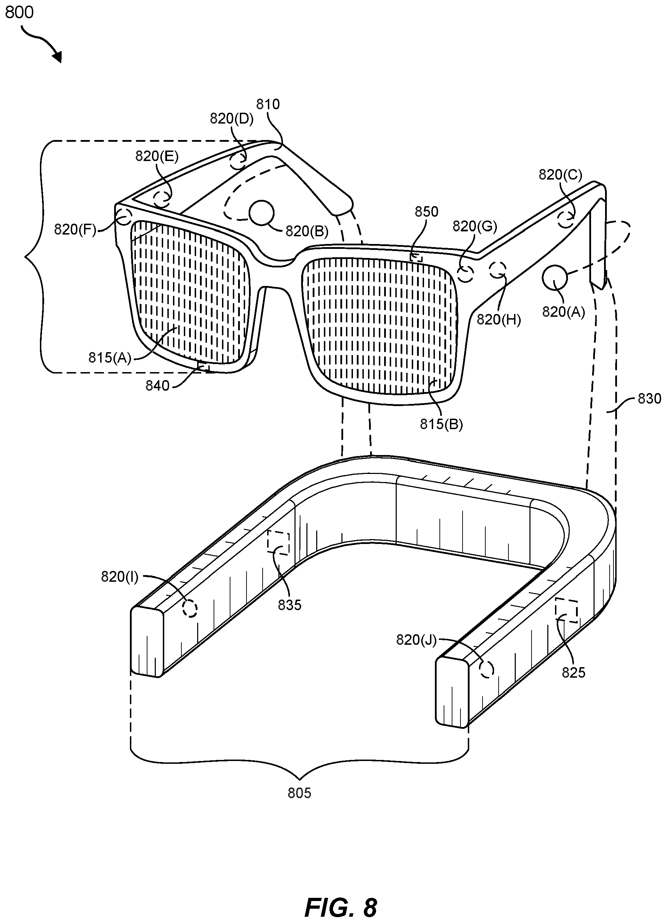

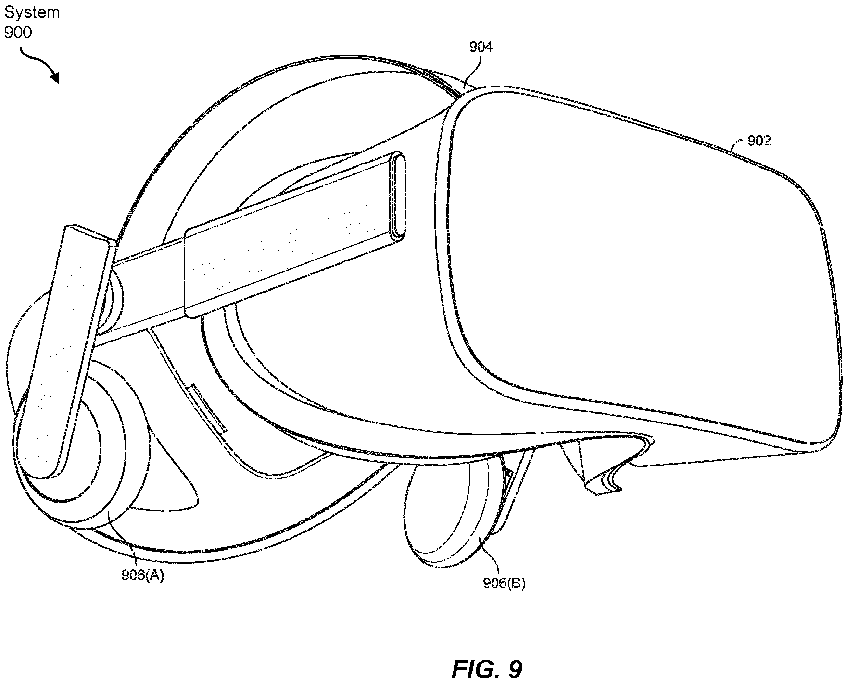

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality. Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 800 in FIG. 8) or that visually immerses a user in an artificial reality (such as, e.g., virtual-reality system 900 in FIG. 9). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 8, augmented-reality system 800 may include an eyewear device 802 with a frame 810 configured to hold a left display device 815(A) and a right display device 815(B) in front of a user's eyes. Display devices 815(A) and 815(B) may act together or independently to present an image or series of images to a user. While augmented-reality system 800 includes two displays, embodiments of this disclosure may be implemented in augmented-reality systems with a single NED or more than two NEDs.

In some embodiments, augmented-reality system 800 may include one or more sensors, such as sensor 840. Sensor 840 may generate measurement signals in response to motion of augmented-reality system 800 and may be located on substantially any portion of frame 810. Sensor 840 may represent one or more of a variety of different sensing mechanisms, such as a position sensor, an inertial measurement unit (IMU), a depth camera assembly, a structured light emitter and/or detector, or any combination thereof. In some embodiments, augmented-reality system 800 may or may not include sensor 840 or may include more than one sensor. In embodiments in which sensor 840 includes an IMU, the IMU may generate calibration data based on measurement signals from sensor 840. Examples of sensor 840 may include, without limitation, accelerometers, gyroscopes, magnetometers, other suitable types of sensors that detect motion, sensors used for error correction of the IMU, or some combination thereof.

In some examples, augmented-reality system 800 may also include a microphone array with a plurality of acoustic transducers 820(A)-820(J), referred to collectively as acoustic transducers 820. Acoustic transducers 820 may represent transducers that detect air pressure variations induced by sound waves. Each acoustic transducer 820 may be configured to detect sound and convert the detected sound into an electronic format (e.g., an analog or digital format). The microphone array in FIG. 8 may include, for example, ten acoustic transducers: 820(A) and 820(B), which may be designed to be placed inside a corresponding ear of the user, acoustic transducers 820(C), 820(D), 820(E), 820(F), 820(G), and 820(H), which may be positioned at various locations on frame 810, and/or acoustic transducers 820(I) and 820(J), which may be positioned on a corresponding neckband 805.

In some embodiments, one or more of acoustic transducers 820(A)-(J) may be used as output transducers (e.g., speakers). For example, acoustic transducers 820(A) and/or 820(B) may be earbuds or any other suitable type of headphone or speaker.

The configuration of acoustic transducers 820 of the microphone array may vary. While augmented-reality system 800 is shown in FIG. 8 as having ten acoustic transducers 820, the number of acoustic transducers 820 may be greater or less than ten. In some embodiments, using higher numbers of acoustic transducers 820 may increase the amount of audio information collected and/or the sensitivity and accuracy of the audio information. In contrast, using a lower number of acoustic transducers 820 may decrease the computing power required by an associated controller 850 to process the collected audio information. In addition, the position of each acoustic transducer 820 of the microphone array may vary. For example, the position of an acoustic transducer 820 may include a defined position on the user, a defined coordinate on frame 810, an orientation associated with each acoustic transducer 820, or some combination thereof.

Acoustic transducers 820(A) and 820(B) may be positioned on different parts of the user's ear, such as behind the pinna, behind the tragus, and/or within the auricle or fossa. Or, there may be additional acoustic transducers 820 on or surrounding the ear in addition to acoustic transducers 820 inside the ear canal. Having an acoustic transducer 820 positioned next to an ear canal of a user may enable the microphone array to collect information on how sounds arrive at the ear canal. By positioning at least two of acoustic transducers 820 on either side of a user's head (e.g., as binaural microphones), augmented-reality device 800 may simulate binaural hearing and capture a 3D stereo sound field around about a user's head. In some embodiments, acoustic transducers 820(A) and 820(B) may be connected to augmented-reality system 800 via a wired connection 830, and in other embodiments acoustic transducers 820(A) and 820(B) may be connected to augmented-reality system 800 via a wireless connection (e.g., a BLUETOOTH connection). In still other embodiments, acoustic transducers 820(A) and 820(B) may not be used at all in conjunction with augmented-reality system 800.

Acoustic transducers 820 on frame 810 may be positioned in a variety of different ways, including along the length of the temples, across the bridge, above or below display devices 815(A) and 815(B), or some combination thereof. Acoustic transducers 820 may also be oriented such that the microphone array is able to detect sounds in a wide range of directions surrounding the user wearing the augmented-reality system 800. In some embodiments, an optimization process may be performed during manufacturing of augmented-reality system 800 to determine relative positioning of each acoustic transducer 820 in the microphone array.

In some examples, augmented-reality system 800 may include or be connected to an external device (e.g., a paired device), such as neckband 805. Neckband 805 generally represents any type or form of paired device. Thus, the following discussion of neckband 805 may also apply to various other paired devices, such as charging cases, smart watches, smart phones, wrist bands, other wearable devices, hand-held controllers, tablet computers, laptop computers, other external compute devices, etc.

As shown, neckband 805 may be coupled to eyewear device 802 via one or more connectors. The connectors may be wired or wireless and may include electrical and/or non-electrical (e.g., structural) components. In some cases, eyewear device 802 and neckband 805 may operate independently without any wired or wireless connection between them. While FIG. 8 illustrates the components of eyewear device 802 and neckband 805 in example locations on eyewear device 802 and neckband 805, the components may be located elsewhere and/or distributed differently on eyewear device 802 and/or neckband 805. In some embodiments, the components of eyewear device 802 and neckband 805 may be located on one or more additional peripheral devices paired with eyewear device 802, neckband 805, or some combination thereof. Pairing external devices, such as neckband 805, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 800 may be provided by a paired device or shared between a paired device and an eyewear device, thus reducing the weight, heat profile, and form factor of the eyewear device overall while still retaining desired functionality. For example, neckband 805 may allow components that would otherwise be included on an eyewear device to be included in neckband 805 since users may tolerate a heavier weight load on their shoulders than they would tolerate on their heads. Neckband 805 may also have a larger surface area over which to diffuse and disperse heat to the ambient environment. Thus, neckband 805 may allow for greater battery and computation capacity than might otherwise have been possible on a stand-alone eyewear device. Since weight carried in neckband 805 may be less invasive to a user than weight carried in eyewear device 802, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 805 may be communicatively coupled with eyewear device 802 and/or to other devices. These other devices may provide certain functions (e.g., tracking, localizing, depth mapping, processing, storage, etc.) to augmented-reality system 800. In the embodiment of FIG. 8, neckband 805 may include two acoustic transducers (e.g., 820(I) and 820(J)) that are part of the microphone array (or potentially form their own microphone subarray). Neckband 805 may also include a controller 825 and a power source 835.

Acoustic transducers 820(I) and 820(J) of neckband 805 may be configured to detect sound and convert the detected sound into an electronic format (analog or digital). In the embodiment of FIG. 8, acoustic transducers 820(I) and 820(J) may be positioned on neckband 805, thereby increasing the distance between the neckband acoustic transducers 820(I) and 820(J) and other acoustic transducers 820 positioned on eyewear device 802. In some cases, increasing the distance between acoustic transducers 820 of the microphone array may improve the accuracy of beamforming performed via the microphone array. For example, if a sound is detected by acoustic transducers 820(C) and 820(D) and the distance between acoustic transducers 820(C) and 820(D) is greater than, e.g., the distance between acoustic transducers 820(D) and 820(E), the determined source location of the detected sound may be more accurate than if the sound had been detected by acoustic transducers 820(D) and 820(E).

Controller 825 of neckband 805 may process information generated by the sensors on neckband 805 and/or augmented-reality system 800. For example, controller 825 may process information from the microphone array that describes sounds detected by the microphone array. For each detected sound, controller 825 may perform a direction-of-arrival (DOA) estimation to estimate a direction from which the detected sound arrived at the microphone array. As the microphone array detects sounds, controller 825 may populate an audio data set with the information. In embodiments in which augmented-reality system 800 includes an inertial measurement unit, controller 825 may compute all inertial and spatial calculations from the IMU located on eyewear device 802. A connector may convey information between augmented-reality system 800 and neckband 805 and between augmented-reality system 800 and controller 825. The information may be in the form of optical data, electrical data, wireless data, or any other transmittable data form. Moving the processing of information generated by augmented-reality system 800 to neckband 805 may reduce weight and heat in eyewear device 802, making it more comfortable to the user.

Power source 835 in neckband 805 may provide power to eyewear device 802 and/or to neckband 805. Power source 835 may include, without limitation, lithium ion batteries, lithium-polymer batteries, primary lithium batteries, alkaline batteries, or any other form of power storage. In some cases, power source 835 may be a wired power source. Including power source 835 on neckband 805 instead of on eyewear device 802 may help better distribute the weight and heat generated by power source 835.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 900 in FIG. 9, that mostly or completely covers a user's field of view. Virtual-reality system 900 may include a front rigid body 902 and a band 904 shaped to fit around a user's head. Virtual-reality system 900 may also include output audio transducers 906(A) and 906(B). Furthermore, while not shown in FIG. 9, front rigid body 902 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 800 and/or virtual-reality system 900 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 800 and/or virtual-reality system 900 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 800 and/or virtual-reality system 900 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

**Claims**

1. A computer-implemented method comprising:

   receiving a video stream with a plurality of frames;
   detecting at least one object within a selected frame of the video stream;
   decomposing the at least one object within the selected frame into a plurality of patches;
   associating a subset of the plurality of patches with at least one candidate patch within a subsequent frame of the video stream; and
   determining, based at least in part on a location of the at least one candidate patch within the subsequent frame, a location of the at least one object within the subsequent frame of the video stream.

2. The computer-implemented method of claim 1, wherein decomposing the at least one object into the plurality of patches comprises decomposing the at least one object into a tessellation of patches.

3. The computer-implemented method of claim 1 or claim 2, wherein determining the location of the at least one object comprises determining a bounding box for the at least one object based at least in part on determining a bounding box that contains the at least one candidate patch.

4. The computer-implemented method of any preceding claim, further comprising:
   retrieving at least one previous patch of the at least one object from a previous frame of the video stream, wherein associating the subset of the plurality of patches with the at least one candidate patch within the subsequent frame further comprises associating the at least one previous patch of the at least one object with the at least one candidate patch within the subsequent frame.

5. The computer-implemented method of any preceding claim, further comprising storing at least one of the subset of the plurality of patches in association with the at least one object.

6. The computer-implemented method of any preceding claim, wherein associating the subset of the plurality of patches with the at least one candidate patch within the subsequent frame comprises estimating a location of the at least one candidate patch within the subsequent frame based at least in part on at least one of:

   a location of one or more of the subset of the plurality of patches within the selected frame; or
   a trajectory of the at least one object at a time of the selected frame.

7. The computer-implemented method of any preceding claim, wherein associating the subset of the plurality of patches with the at least one candidate patch within the subsequent frame comprises estimating a location of the at least one candidate patch within the subsequent frame based at least in part on isolating a local motion of the at least one object from an egocentric-based global motion of the video between the selected frame and the subsequent frame.

8. The computer-implemented method of claim 7, wherein isolating the local motion of the at least one object from the egocentric-based global motion of the video stream comprises:
   analyzing a difference between the selected frame and the subsequent frame to estimate the egocentric-based global motion of the video stream between the selected frame and the subsequent frame.

9. The computer-implemented method of claim 7, wherein isolating the local motion of the at least one object from the egocentric-based global motion of the video stream comprises estimating the egocentric-based global motion of the video stream based at least in part on a motion sensor that detects a motion of a device that captures the video.

10. The computer-implemented method of any preceding claim,

    wherein detecting the at least one object within the selected frame comprises detecting a plurality of objects; further comprising separately tracking each of the plurality of objects based on separate sets of patches associated with each of the plurality of objects.

11. A non-transitory computer-readable medium comprising one or more computer-executable instructions that, when executed by at least one processor of a computing device, cause the computing device to implement the method of any preceding claim.

12. A system comprising:

    at least one physical processor; and
    physical memory comprising computer-executable instructions that, when executed by the physical processor, cause the physical processor to implement the method of any of claims 1 to 10.

110(a)    110(b)    110(c)

112

**FIG. 1A**

120(a)    120(b)    120(c)

122    124    126

**FIG. 1B**

130(a)    130(b)    130(c)

134
132

**FIG. 1C**

*FIG. 2*

18

*FIG. 3*

EP 4 495 882 A1

FIG. 4

FIG. 5

FIG. 6

Method
700

Start

Receive a video stream with a plurality of frames
710

Detect at least one object within a selected frame of the video
stream
720

Decompose the object within the selected frame into patches
730

Associate a subset of the patches with one or more candidate
patches within a subsequent frame of the video stream
740

Determine, based at least in part on a location of the candidate
patches within the subsequent frame, a location of the object within
the subsequent frame of the video stream
750

End

*FIG. 7*

**FIG. 8**

EP 4 495 882 A1

System
900

904

902

906(A)

906(B)

**FIG. 9**

Europäisches Patentamt

European Patent Office

Office européen des brevets

# EUROPEAN SEARCH REPORT

**Application Number**

EP 24 16 5967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG MINGZHEN ET AL: "Tracking Multiple Deformable Objects in Egocentric Videos", 2023 IEEE/CVF CONFERENCE ON COMPUTER VISION AND PATTERN RECOGNITION (CVPR), IEEE, 17 June 2023 (2023-06-17), pages 1461-1471, XP034402721, DOI: 10.1109/CVPR52729.2023.00147 [retrieved on 2023-08-22] | 1-8, 10-12 | INV. G06T7/246 |
| Y | * the whole document * | 9 | |
| X | MIHIR DURVE ET AL: "Tracking droplets in soft granular flows with deep learning techniques", ARXIV.ORG, CORNELL UNIVERSITY LIBRARY, 201 OLIN LIBRARY CORNELL UNIVERSITY ITHACA, NY 14853, 4 July 2021 (2021-07-04), XP091007705, * figure 5 * * page 2, paragraph 5 * * page 6, paragraph 3 - paragraph 4 * | 1-6,11, 12 | |
| Y | Tan Shuhan ET AL: "EgoDistill: Egocentric Head Motion Distillation for Efficient Video Understanding", , 5 January 2023 (2023-01-05), XP093199816, DOI: https://doi.org/10.48550/arXiv.2301.02217 Retrieved from the Internet: URL:https://arxiv.org/abs/2301.02217 * the whole document * | 9 | **TECHNICAL FIELDS SEARCHED (IPC)**<br><br>G06T |

The present search report has been drawn up for all claims

| Place of search | Date of completion of the search | Examiner |
|---|---|---|
| Munich | 9 September 2024 | Yilmaz, Özgün |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)